# EUROPEAN PATENT APPLICATION

(11) **EP 4 254 562 A1**
(43) Date of publication of application: **04.10.2023**
(21) Application number: 21897679.3
(22) Date of filing: 05.11.2021
(51) Int. Cl.: H01M 4/62, C08F 220/44, H01M 4/13, H01M 10/0566

(54) **BINDER COMPOSITION FOR POSITIVE ELECTRODE OF NONAQUEOUS SECONDARY BATTERY, ELECTRICAL CONDUCTOR DISPERSION FOR POSITIVE ELECTRODE OF NONAQUEOUS SECONDARY BATTERY, SLURRY COMPOSITION FOR POSITIVE ELECTRODE OF NONAQUEOUS SECONDARY BATTERY, POSITIVE ELECTRODE FOR NONAQUEOUS SECONDARY BATTERY, AND NONAQUEOUS SECONDARY BATTERY**

(30) Priority: 30.11.2020 JP 2020199224
(71) Applicant: Zeon Corporation, Tokyo 100-8246 (JP)
(72) Inventor: MIYAMAE, Tsubasa, Tokyo 100-8246 (JP); NAKAI, Akito, Tokyo 100-8246 (JP)
(74) Representative: Maiwald GmbH
(86) International application number: PCT/JP2021/040877
(87) International publication number: WO 2022/113704

(57) **Abstract**

A binder composition for a non-aqueous secondary battery positive electrode contains a polymer. The polymer includes a nitrile group-containing monomer unit and has a weight-average molecular weight of 300,000 or less and a sulfur content of 500 ppm or more.

## Description

### TECHNICAL FIELD

The present disclosure relates to a binder composition for a non-aqueous secondary battery positive electrode, a conductive material dispersion liquid for a non-aqueous secondary battery positive electrode, a slurry composition for a non-aqueous secondary battery positive electrode, a positive electrode for a non-aqueous secondary battery, and a non-aqueous secondary battery.

### BACKGROUND

Non-aqueous secondary batteries (non-aqueous electrolyte solution secondary batteries) such as lithium ion secondary batteries have characteristics such as compact size, light weight, high energy-density, and the ability to be repeatedly charged and discharged, and are used in a wide variety of applications. Consequently, in recent years, studies have been made to improve battery members such as electrodes for the purpose of achieving even higher non-aqueous secondary battery performance.

A positive electrode for a non-aqueous secondary battery generally includes a current collector and an electrode mixed material layer (positive electrode mixed material layer) formed on the current collector. The positive electrode mixed material layer is formed, for example, using a slurry composition in which a positive electrode active material, a binder composition containing a binder, and so forth are dispersed in a dispersion medium.

In order to further improve the performance of non-aqueous secondary batteries, attempts have been made in recent years to improve binder compositions used in the formation of an electrode mixed material layer that is a constituent element of an electrode in a non-aqueous secondary battery.

More specifically, studies and proposals have been made in relation to various binder compositions for non-aqueous secondary battery electrodes that include nitrile group-containing monomer units and hydrogenated butadiene units (for example, refer to Patent Literature (PTL) 1 to 3). Moreover, polymers including nitrile group-containing monomer units and hydrogenated butadiene units have been improved in various aspects such as to have various attributes that are industrially advantageous. For example, PTL 4 proposes restricting the residual amount of molecular weight modifier to 40 ppm or less in a situation in which a polymer is obtained through copolymerization of a conjugated diene monomer and an α,β-unsaturated nitrile monomer in the presence of a mercapto group-containing molecular weight modifier.

### CITATION LIST

### Patent Literature

PTL 1: JP2018-522803A
PTL 2: JP2018-533175A
PTL 3: WO2020/137594A1
PTL 4: JP2003-221407A

### SUMMARY

### (Technical Problem)

From a viewpoint of increasing secondary battery producibility and performance, it is necessary for a binder composition to increase the dispersibility of a conductive material dispersion liquid that is obtained by mixing the binder composition with carbon nanotubes serving as a conductive material. Moreover, it is necessary for an obtained secondary battery to have little degradation upon comparison of discharge capacity before and after storage at high temperature (i.e., have excellent high-temperature storage characteristics).

However, it has not been possible to achieve a balance of increasing dispersibility of an obtained conductive material dispersion liquid and enhancing high-temperature storage characteristics of an obtained secondary battery to high levels with binder compositions that have previously been studied and used such as those described above.

Accordingly, one object of the present disclosure is to provide a binder composition for a non-aqueous secondary battery positive electrode that can form a conductive material dispersion liquid having excellent dispersibility and a secondary battery having excellent high-temperature storage characteristics.

Another object of the present disclosure is to provide a conductive material dispersion liquid for a non-aqueous secondary battery positive electrode that has excellent dispersibility and can form a secondary battery having excellent high-temperature storage characteristics.

Another object of the present disclosure is to provide a slurry composition for a non-aqueous secondary battery positive electrode that can form a secondary battery having excellent high-temperature storage characteristics.

Another object of the present disclosure is to provide a positive electrode for a non-aqueous secondary battery that can form a secondary battery having excellent high-temperature storage characteristics and also to provide a secondary battery that has excellent high-temperature storage characteristics.

### (Solution to Problem)

The inventors conducted diligent investigation to achieve the objects set forth above. The inventors discovered that through a binder composition for a non-aqueous secondary battery positive electrode containing a polymer that includes a nitrile group-containing monomer unit and has a weight-average molecular weight and sulfur content that are within specific ranges, it is possible to form a conductive material dispersion liquid having excellent dispersibility and a secondary battery having excellent high-temperature storage characteristics, and, in this manner, completed the present disclosure.

Specifically, the present disclosure aims to advantageously solve the problems set forth above, and a presently disclosed binder composition for a non-aqueous secondary battery positive electrode comprises a polymer, wherein the polymer includes a nitrile group-containing monomer unit, and the polymer has a weight-average molecular weight of 300,000 or less and a sulfur content of 500 ppm or more. Through a binder composition for a non-aqueous secondary battery positive electrode containing a polymer that includes a nitrile group-containing monomer unit and that has a weight-average molecular weight and sulfur content within specific ranges in this manner, it is possible to form a conductive material dispersion liquid having excellent dispersibility and a secondary battery having excellent high-temperature storage characteristics.

Note that a "monomer unit" of a polymer referred to in the present disclosure is a "repeating unit derived from that monomer that is included in a polymer obtained using the monomer".

Also note that the weight-average molecular weight and sulfur content of a polymer can be measured according to methods described in the EXAMPLES section of the present specification.

In the presently disclosed binder composition for a non-aqueous secondary battery positive electrode, the polymer preferably includes a linear alkylene structural unit having a carbon number of 4 or more in a proportion of not less than 30 mass% and not more than 80 mass%. When the polymer includes a linear alkylene structural unit having a carbon number of 4 or more in a proportion of not less than 30 mass% and not more than 80 mass%, dispersibility of a conductive material can be improved in a situation in which a binder composition is produced.

Note that the "proportional content of a linear alkylene structural unit having a carbon number of 4 or more" in a polymer can be measured by a nuclear magnetic resonance (NMR) method such as ¹H-NMR.

In the presently disclosed binder composition for a non-aqueous secondary battery positive electrode, the polymer preferably includes the nitrile group-containing monomer unit in a proportion of not less than 10 mass% and not more than 55 mass%. When the polymer includes the nitrile group-containing monomer unit in a proportion of not less than 10 mass% and not more than 55 mass%, dispersibility of a conductive material can be improved in a situation in which a binder composition is produced.

Note that the "proportional content of a nitrile group-containing monomer unit" in a polymer can be measured by a nuclear magnetic resonance (NMR) method such as ¹H-NMR.

In the presently disclosed binder composition for a non-aqueous secondary battery positive electrode, the polymer preferably has an iodine value of not less than 5 mg/100 mg and not more than 100 mg/100 mg. When the iodine value of the polymer is not less than 5 mg/100 mg and not more than 100 mg/100 mg, dispersibility of a conductive material can be improved in a situation in which a binder composition is produced.

Note that the iodine value of a polymer can be measured according to a method described in the EXAMPLES section.

Moreover, the present disclosure aims to advantageously solve the problems set forth above, and a presently disclosed conductive material dispersion liquid for a non-aqueous secondary battery positive electrode comprises: a conductive material including carbon nanotubes; a dispersion medium; and any one of the binder compositions for a non-aqueous secondary battery positive electrode set forth above. By using any one of the binder compositions for a non-aqueous secondary battery positive electrode set forth above in combination with carbon nanotubes serving as a conductive material in this manner, it is possible to obtain a conductive material dispersion liquid that has excellent dispersibility and can form a secondary battery having excellent high-temperature storage characteristics.

In the presently disclosed conductive material dispersion liquid for a non-aqueous secondary battery positive electrode, a value of volume-average particle diameter D50 in a particle size distribution for dispersed particle diameter of the carbon nanotubes is preferably not less than 0.1 µm and not more than 5.0 µm. When the value of volume-average particle diameter D50 for dispersed particle diameter of the carbon nanotubes in the conductive material dispersion liquid is not less than 0.1 µm and not more than 5.0 µm, dispersibility of the carbon nanotubes in the conductive material dispersion liquid can be further increased.

Note that the value of volume-average particle diameter D50 in a particle size distribution for dispersed particle diameter of carbon nanotubes can be measured according to a method described in the EXAMPLES section of the present specification.

Furthermore, the present disclosure aims to advantageously solve the problems set forth above, and a presently disclosed slurry composition for a non-aqueous secondary battery positive electrode comprises: an electrode active material; and any one of the conductive material dispersion liquids set forth above. When a slurry composition for a positive electrode contains the conductive material dispersion liquid set forth above, it is possible to form a secondary battery having excellent high-temperature storage characteristics.

Also, the present disclosure aims to advantageously solve the problems set forth above, and a presently disclosed positive electrode for a non-aqueous secondary battery comprises a positive electrode mixed material layer formed using the slurry composition for a non-aqueous secondary battery positive electrode. By using a positive electrode that includes a positive electrode mixed material layer formed using the slurry composition for a positive electrode set forth above in this manner, it is possible to reliably obtain a non-aqueous secondary battery having excellent high-temperature storage characteristics.

Moreover, the present disclosure aims to advantageously solve the problems set forth above, and a presently disclosed non-aqueous secondary battery comprises: the positive electrode for a non-aqueous secondary battery set forth above; a negative electrode; an electrolyte solution; and a separator. By using the positive electrode for a non-aqueous secondary battery set forth above in this manner, a non-aqueous secondary battery having excellent high-temperature storage characteristics is obtained.

### (Advantageous Effect)

According to the present disclosure, it is possible to provide a binder composition for a non-aqueous secondary battery positive electrode that can form a conductive material dispersion liquid having excellent dispersibility and a secondary battery having excellent high-temperature storage characteristics.

Moreover, according to the present disclosure, it is possible to provide a conductive material dispersion liquid for a non-aqueous secondary battery positive electrode that has excellent dispersibility and can form a secondary battery having excellent high-temperature storage characteristics.

Furthermore, according to the present disclosure, it is possible to provide a slurry composition for a non-aqueous secondary battery positive electrode that can form a secondary battery having excellent high-temperature storage characteristics.

Also, according to the present disclosure, it is possible to provide a positive electrode for a non-aqueous secondary battery that can form a secondary battery having excellent high-temperature storage characteristics and also to provide a secondary battery that has excellent high-temperature storage characteristics.

### DETAILED DESCRIPTION

The following provides a detailed description of embodiments of the present disclosure.

The presently disclosed binder composition for a non-aqueous secondary battery positive electrode can be used in production of the presently disclosed conductive material dispersion liquid for a non-aqueous secondary battery positive electrode. Moreover, the presently disclosed conductive material dispersion liquid for a non-aqueous secondary battery positive electrode can be used in production of the presently disclosed slurry composition for a non-aqueous secondary battery positive electrode. Furthermore, the presently disclosed slurry composition for a non-aqueous secondary battery positive electrode can be used in production of a positive electrode of a non-aqueous secondary battery such as a lithium ion secondary battery. Also, a feature of the presently disclosed non-aqueous secondary battery is that the presently disclosed positive electrode for a non-aqueous secondary battery, which is formed using the presently disclosed slurry composition for a non-aqueous secondary battery positive electrode, is used therein.

### (Binder composition for non-aqueous secondary battery positive electrode)

The presently disclosed binder composition for a non-aqueous secondary battery positive electrode is a binder composition for a non-aqueous secondary battery positive electrode that contains a specific polymer. Features of the specific polymer are that the polymer includes a nitrile group-containing monomer unit and has a weight-average molecular weight of 300,000 or less and a sulfur content of 500 ppm or more. As a result of containing a polymer that satisfies the specific chemical composition and properties set forth above, the presently disclosed binder composition for a non-aqueous secondary battery positive electrode can form a conductive material dispersion liquid having excellent dispersibility and a secondary battery having excellent high-temperature storage characteristics. The presently disclosed binder composition for a non-aqueous secondary battery positive electrode may optionally contain a solvent and other components in addition to the specific polymer.

### <Polymer>

The polymer is a component that can cause good dispersion of carbon nanotubes serving as a conductive material in a conductive material dispersion liquid that is produced using the binder composition. Moreover, in a positive electrode that is produced by forming a positive electrode mixed material layer on a current collector using a slurry composition for a non-aqueous secondary battery positive electrode in which a conductive material dispersion liquid containing the polymer is compounded, the polymer is a component that can inhibit the occurrence of side reactions by protecting the surfaces of materials that contribute to electrochemical reactions such as a positive electrode active material and a conductive material. This makes it possible to enhance high-temperature storage characteristics of an obtained secondary battery. Furthermore, the polymer is a component that can function to hold components contained in a positive electrode mixed material layer so that these components do not detach from the positive electrode mixed material layer.

### <Chemical composition of polymer>

The polymer is required to include a nitrile group-containing monomer unit and preferably further includes a linear alkylene structural unit having a carbon number of 4 or more. Moreover, the polymer may optionally include repeating units other than the nitrile group-containing monomer unit and the linear alkylene structural unit having a carbon number of 4 or more.

### [Nitrile group-containing monomer unit]

Examples of nitrile group-containing monomers that can form a nitrile group-containing monomer unit include α,β-ethylenically unsaturated nitrile monomers. No specific limitations are placed on α,β-ethylenically unsaturated nitrile monomers that can be used other than being an α,β-ethylenically unsaturated compound that contains a nitrile group. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these examples, acrylonitrile and methacrylonitrile are preferable, and acrylonitrile is more preferable as a nitrile group-containing monomer.

One of these nitrile group-containing monomers may be used individually, or two or more of these nitrile group-containing monomers may be used in combination.

The amount of nitrile group-containing monomer units in the polymer when all repeating units (total of structural units and monomer units) in the polymer are taken to be 100 mass% is preferably 10 mass% or more, more preferably 20 mass% or more, and even more preferably 30 mass% or more, and is preferably 55 mass% or less, and more preferably 40 mass% or less. When the amount of nitrile group-containing monomer units in the polymer is within any of the ranges set forth above, dispersibility of a conductive material can be improved in a situation in which a binder composition is produced.

### [Linear alkylene structural unit having carbon number of 4 or more]

The linear alkylene structural unit having a carbon number of 4 or more is a repeating unit that is composed of only a linear alkylene structure represented by a general formula -CₙH₂ₙ- (n is an integer of 4 or more). In a case in which the polymer includes a linear alkylene structural unit having a carbon number of 4 or more, dispersibility of a conductive material can be improved when the polymer is mixed with carbon nanotubes serving as the conductive material to produce a conductive material dispersion liquid.

The method by which the linear alkylene structural unit having a carbon number of 4 or more is introduced into the polymer is not specifically limited and may, for example, be either of the following methods (1) and (2).
(1) A method in which a polymer is produced from a monomer composition containing a conjugated diene monomer and then the polymer is hydrogenated so as to convert a conjugated diene monomer unit to a linear alkylene structural unit having a carbon number of 4 or more
(2) A method in which a polymer is produced from a monomer composition containing a 1-olefin monomer having a carbon number of 4 or more

Of these methods, method (1) is preferable in terms of ease of production of the polymer.

In other words, the linear alkylene structural unit having a carbon number of 4 or more is preferably a structural unit obtained through hydrogenation of a conjugated diene monomer unit (i.e., is preferably a hydrogenated conjugated diene unit), and is more preferably a structural unit obtained through hydrogenation of a 1,3-butadiene unit (i.e., is more preferably a hydrogenated 1,3-butadiene unit).

The 1-olefin monomer having a carbon number of 4 or more may be 1-butene, 1-hexene, or the like, for example.

One of these conjugated diene monomers or 1-olefin monomers may be used individually, or two or more of these conjugated diene monomers or 1-olefin monomers may be used in combination.

Examples of conjugated diene monomers that can be used in method (1) include conjugated diene compounds such as 1,3-butadiene, isoprene, 2,3-dimethyl-1,3-butadiene, and 1,3-pentadiene. Of these conjugated diene monomers, 1,3-butadiene is preferable. In other words, the linear alkylene structural unit having a carbon number of 4 or more is preferably a structural unit obtained through hydrogenation of a conjugated diene monomer unit (i.e., is preferably a hydrogenated conjugated diene unit), and is more preferably a structural unit obtained through hydrogenation of a 1,3-butadiene unit (i.e., is more preferably a hydrogenated 1,3-butadiene unit). The hydrogenation can be performed by a commonly known method such as described further below.

Note that in a situation in which the linear alkylene structural unit having a carbon number of 4 or more is introduced in the polymer through method (1), a conjugated diene monomer unit may remain in the polymer in a situation which conjugated diene monomer units have not been completely hydrogenated. In other words, the polymer may include a conjugated diene monomer unit as an optional repeating unit.

The proportional content of linear alkylene structural units having a carbon number of 4 or more in the polymer when all repeating units (total of structural units and monomer units) in the polymer are taken to be 100 mass% is preferably 30 mass% or more, more preferably 50 mass% or more, and even more preferably 60 mass% or more, and is preferably 80 mass% or less, more preferably 75 mass% or less, and even more preferably 70 mass% or less. When the proportional content of linear alkylene structural units having a carbon number of 4 or more in the polymer is within any of the ranges set forth above, dispersibility of a conductive material can be further improved in a situation in which a binder composition is produced.

Note that in a case in which the polymer includes a conjugated diene monomer unit, the total proportional content of conjugated diene monomer units and linear alkylene structural units having a carbon number of 4 or more in the polymer preferably satisfies any of the preferred ranges set forth above.

### -Other repeating units-

Examples of monomers that can form monomer units other than a nitrile group-containing monomer unit, a linear alkylene structural unit having a carbon number of 4 or more, and a conjugated diene unit (hereinafter, also referred to as "other monomers") include, but are not specifically limited to, (meth)acrylic acid ester monomers, styrene monomers, and polymerizable monomers having a hydrophilic group.

One of these monomers may be used individually, or two or more of these monomers may be used in combination. In the present disclosure, "(meth)acryl" is used to indicate "acryl" and/or "methacryl".

Examples of (meth)acrylic acid ester monomers include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

Examples of polymerizable monomers having a hydrophilic group include carboxy group-containing monomers, sulfo group-containing monomers, phosphate group-containing monomers, and hydroxy group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group through hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

In the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

In the present disclosure, "(meth)acryloyl" is used to indicate "acryloyl" and/or "methacryloyl".

Examples of hydroxy group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula CH₂=CR¹-COO-(CₙH₂ₙO)ₘ-H (where m represents an integer of 2 to 9, n represents an integer of 2 to 4, and R¹ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

In a case in which the polymer includes other monomer units, the proportion constituted by the other monomer units in the polymer is preferably 10 mass% or less. This is because when the proportion of other monomer units is 10 mass% or less, dispersibility of a conductive material can be increased in a situation in which a binder composition is produced. It goes without saying that the polymer may be a polymer that does not include other monomer units.

### [Production method of polymer]

No specific limitations are placed on the method by which the above-described polymer is produced, and the method may, for example, be solution polymerization, suspension polymerization, bulk polymerization, or emulsion polymerization.

Moreover, the polymerization method may be addition polymerization such as ionic polymerization, radical polymerization, or living radical polymerization. A known polymerization initiator such as a redox polymerization initiator including an iron-based compound may be used as a polymerization initiator.

Moreover, a molecular weight modifier having a sulfur-containing group such as a mercapto group is preferably used in the polymerization. Examples of mercapto group-containing compounds that may be used as the molecular weight modifier include mercapto group-containing compounds having a carbon number of 8 to 12 such as octyl mercaptan, 2,2,4,6,6-pentamethyl-4-heptanethiol, 2,4,4,6,6-pentamethyl-2-heptanethiol, 2,3,4,6,6-pentamethyl-2-heptanethiol, 2,3,4,6,6-pentamethyl-3-heptanethiol, t-dodecyl mercaptan, and n-dodecyl mercaptan; and mercapto group-containing compounds such as 2,2,4,6,6-pentamethyl-4-octanethiol, 2,2,4,6,6,8,8-heptamethyl-4-nonanethiol, bis(2-mercaptoethyl) sulfide, methyl 3-mercaptopropionate, and 1-butanethiol. Of these compounds, mercapto group-containing compounds having a carbon number of 8 to 12 are preferable, and t-dodecyl mercaptan is more preferable.

The amount of a mercapto group-containing compound that is used as a molecular weight modifier can be set such that the sulfur content in the resultant polymer is a desired value.

In a situation in which the polymer is produced by method (1) described above, the method of polymerization of the polymer that is to be hydrogenated is preferably radical polymerization using a redox polymerization initiator that includes an iron-based compound. The redox polymerization initiator may be, but is not specifically limited to, a combination of cumene hydroperoxide, ethylenediaminetetraacetic acid iron monosodium salt, sodium hydroxymethanesulfinate, and ethylenediaminetetraacetic acid tetrasodium salt (EDTA·4Na), for example. Moreover, in a situation in which the above-described polymer is produced by method (1), it is preferable that coagulation using a coagulant is performed after emulsion polymerization to collect a product that is then subjected to hydrogenation (optionally after performing a subsequently described "metathesis reaction").

The hydrogenation may be performed by a known hydrogenation method such as an oil-layer hydrogenation method or a water-layer hydrogenation method. The catalyst used in the hydrogenation may be any selective hydrogenation catalyst that is commonly known such as a palladium-based catalyst or a rhodium-based catalyst. Two or more of such catalysts may be used in combination.

The hydrogenation of the polymer may be carried out, for example, by a method described in JP4509792B2. Specifically, the hydrogenation of the polymer may be performed after subjecting the polymer to a metathesis reaction in the presence of a catalyst and a co-olefin.

The catalyst in the metathesis reaction may be a known ruthenium-based catalyst. Of such catalysts, Grubbs' catalysts such as bis(tricyclohexylphosphine)benzylidene ruthenium dichloride and 1,3-bis(2,4,6-trimethylphenyl)-2-(imidazolidinylidene)(dichlorophenylmethylene)(tricyclohexylphosphine)ruth enium are preferable as the catalyst in the metathesis reaction. The co-olefin may be an olefin having a carbon number of 2 to 16 such as ethylene, isobutene, or 1-hexene. Furthermore, a known homogeneous hydrogenation catalyst such as Wilkinson's catalyst ((PPh₃)₃RhCl), for example, can be used as a hydrogenation catalyst in hydrogenation performed after the metathesis reaction.

### <Properties of polymer>

### [Weight-average molecular weight of polymer]

The weight-average molecular weight of the polymer is required to be 300,000 or less as previously described. Moreover, the weight-average molecular weight of the polymer is preferably 2,000 or more, more preferably 7,000 or more, and even more preferably 8,500 or more, and is preferably 150,000 or less, more preferably 100,000 or less, and even more preferably 10,000 or less. When the weight-average molecular weight of the polymer is within any of the ranges set forth above, dispersibility of carbon nanotubes in a conductive material dispersion liquid can be increased in a situation in which a conductive material dispersion liquid containing carbon nanotubes as a conductive material is produced. The average molecular weight of the polymer can be controlled by adjusting the amount of molecular weight modifier compounded during polymerization, for example.

### [Sulfur content of polymer]

The sulfur content of the polymer is required to be 500 ppm or more as previously described. Moreover, the sulfur content of the polymer is preferably 1,000 ppm or more, more preferably 3,000 ppm or more, and even more preferably 5,000 ppm or more, and is preferably 20,000 ppm or less, and more preferably 10,000 ppm or less. The inclusion of a sulfur atom in a molecule of the polymer makes it possible to increase oxidation resistance. Moreover, the polymer can protect the surfaces of a positive electrode active material and carbon nanotubes serving as a conductive material in a positive electrode for a secondary battery and can thereby inhibit side reactions inside a secondary battery, which ultimately enables enhancement of high-temperature storage characteristics of the secondary battery. Note that the sulfur atom is preferably bonded to a polymer chain of the polymer rather than simply being attached to the polymer. Through the sulfur content in the polymer being within any of the ranges set forth above, high-temperature storage characteristics of a secondary battery can be further enhanced. Note that the sulfur content of the polymer can be controlled based on the amount of a molecular weight modifier having a sulfur-containing group such as a mercapto group that is compounded during polymerization, for example.

### [Iodine value of polymer]

The iodine value of the polymer is preferably 5 mg/100 mg or more, more preferably 10 mg/100 mg or more, and preferably 20 mg/100 mg or more, and is preferably 100 mg/100 mg or less, more preferably 80 mg/100 mg or less, and even more preferably 70 mg/100 mg or less. When the iodine value of the polymer is within any of the ranges set forth above, dispersibility of carbon nanotubes in a conductive material dispersion liquid can be increased in a situation in which a conductive material dispersion liquid containing carbon nanotubes as a conductive material is produced. Note that the iodine value of the polymer can be controlled based on the amount of a hydrogenation catalyst used in hydrogenation of the polymer, for example.

### <Solvent>

An organic solvent may be used as a solvent that is contained in the binder composition for a non-aqueous secondary battery positive electrode. The organic solvent may be N-methylpyrrolidone (NMP), N,N-dimethylformamide, acetone, or the like, for example. Of these organic solvents, N-methylpyrrolidone (NMP) is preferable from a viewpoint of stability of the binder composition for a non-aqueous secondary battery positive electrode.

### <Other components>

The presently disclosed binder composition for a non-aqueous secondary battery positive electrode may contain components such as reinforcing materials, leveling agents, viscosity modifiers, and additives for electrolyte solution in addition to the components described above. These other components are not specifically limited so long as they do not affect battery reactions and may be selected from commonly known components such as those described in WO2012/115096A1. One of these components may be used individually, or two or more of these components may be used in combination in a freely selected ratio.

### <Production of binder composition for non-aqueous secondary battery positive electrode>

In a case in which the presently disclosed binder composition for a non-aqueous secondary battery positive electrode contains a solvent, the presently disclosed binder composition for a non-aqueous secondary battery positive electrode can be produced by dissolving or dispersing the above-described polymer in the solvent. Specifically, the binder composition for a non-aqueous secondary battery positive electrode can be produced by mixing the above-described components and the solvent using a mixer such as a ball mill, a sand mill, a bead mill, a pigment disperser, a grinding machine, an ultrasonic disperser, a homogenizer, a planetary mixer, or a FILMIX.

Note that in a case in which the used polymer is produced as a water dispersion, the binder composition for a non-aqueous secondary battery positive electrode may be obtained by coagulating the polymer using a coagulant, subsequently removing water, and then mixing in an organic solvent, or may be obtained by mixing the water dispersion of the polymer with an organic solvent and subsequently removing water.

### (Conductive material dispersion liquid for non-aqueous secondary battery positive electrode)

The presently disclosed conductive material dispersion liquid for a non-aqueous secondary battery positive electrode contains a conductive material that includes carbon nanotubes, a dispersion medium, and the presently disclosed binder composition for a non-aqueous secondary battery positive electrode set forth above. As a result of containing the presently disclosed binder composition for a non-aqueous secondary battery positive electrode set forth above, the presently disclosed conductive material dispersion liquid has excellent dispersibility and can form a secondary battery having excellent high-temperature storage characteristics.

### <Conductive material>

The presently disclosed conductive material dispersion liquid for a non-aqueous secondary battery positive electrode is required to contain carbon nanotubes as a conductive material. The conductive material is a component that is compounded in order to promote electrical contact among an electrode active material in an electrode mixed material layer. Examples of other conductive materials besides the carbon nanotubes that can be used include conductive carbon materials such as carbon black (for example, acetylene black, Ketjenblack^{®} (Ketjenblack is a registered trademark in Japan, other countries, or both), and furnace black), graphite, carbon fibers other than carbon nanotubes, and carbon flake; and fibers, foils, and the like of various metals.

One of these conductive materials may be used individually, or two or more of these conductive materials may be used in combination.

The BET specific surface area of the conductive material is preferably 100 m²/g or more, and more preferably 150 m²/g or more, and is normally 2,500 m²/g or less. When the BET specific surface area of the conductive material is not less than any of the lower limits set forth above, this causes good interactions to arise with the polymer contained in the presently disclosed binder composition and can further enhance high-temperature storage characteristics of an obtained secondary battery. It is also possible to form good electrical conduction paths in an electrode mixed material layer and further improve output characteristics of a secondary battery. Moreover, when the BET specific surface area of the conductive material is not more than the upper limit set forth above, aggregation of the conductive material can be inhibited, and dispersibility of the conductive material can be ensured.

In general, carbon nanotubes have a high tendency to aggregate and are difficult to disperse. However, good, stable dispersion of carbon nanotubes is possible in the presently disclosed conductive material dispersion liquid as a result of the presently disclosed conductive material dispersion liquid containing a binder composition that contains a polymer satisfying the specific chemical composition and properties described above.

### <Dispersion medium>

Any of the various organic solvents previously given in the "Solvent" section can be used as the dispersion medium. The amount of the dispersion medium can be set such that the solid content concentration of the conductive material dispersion liquid is, for example, 1 mass% or more, preferably 2 mass% or more, and more preferably 3 mass% or more, and is, for example, 30 mass% or less, preferably 25 mass% or less, and more preferably 20 mass% or less.

### <Other components>

Examples of other components that can be contained in the conductive material dispersion liquid include, but are not specifically limited to, the same other components as can be contained in the presently disclosed binder composition. One other component may be used individually, or two or more other components may be used in combination in a freely selected ratio.

### <Value of D50 of carbon nanotubes in conductive material dispersion liquid>

A value of volume-average particle diameter D50 for dispersed particle diameter of the carbon nanotubes in the conductive material dispersion liquid is preferably not less than 0.1 µm and not more than 5.0 µm, more preferably 4.0 µm or less, and even more preferably 2.0 µm or less. When the value of D50 of the carbon nanotubes in the conductive material dispersion liquid is within any of the ranges set forth above, dispersibility of the conductive material dispersion liquid can be further increased.

### <Production method of conductive material dispersion liquid>

The conductive material dispersion liquid can be produced by mixing the presently disclosed binder composition set forth above, the conductive material, the dispersion medium, and other optional components. Note that in a case in which the binder composition contains a solvent, the solvent may be used in that form as the dispersion medium. The mixing method may be any of the methods previously described in the "Production of binder composition for non-aqueous secondary battery positive electrode" section, but is not specifically limited thereto. With regards to the content ratio of the conductive material and the polymer having the prescribed chemical composition described above in the conductive material dispersion liquid, when the content of the conductive material is taken to be 100 parts by mass, the polymer is preferably 10 parts by mass or more, and more preferably 15 parts by mass or more, and is preferably 100 parts by mass or less, more preferably 50 parts by mass or less, and even more preferably 30 parts by mass or less.

### (Slurry composition for non-aqueous secondary battery positive electrode)

The presently disclosed slurry composition for a non-aqueous secondary battery positive electrode contains a positive electrode active material and the presently disclosed conductive material dispersion liquid set forth above. In other words, the presently disclosed slurry composition for a non-aqueous secondary battery positive electrode contains a positive electrode active material, a polymer, carbon nanotubes serving as a conductive material, and a solvent, and optionally further contains other components. By using the presently disclosed slurry composition for a non-aqueous secondary battery positive electrode, it is possible to form a secondary battery having excellent high-temperature storage characteristics.

### <Conductive material dispersion liquid>

The presently disclosed conductive material dispersion liquid set forth above is used as the conductive material dispersion liquid.

### <Positive electrode active material>

The positive electrode active material is a material that gives and receives electrons in a positive electrode of a secondary battery. In the case of a positive electrode active material for a lithium ion secondary battery, for example, the positive electrode active material is normally a material that can occlude and release lithium.

Although the following describes the positive electrode active material using an example in which the non-aqueous secondary battery is a lithium ion secondary battery, the present disclosure is not limited to the following example.

Specifically, the positive electrode active material for a lithium ion secondary battery may be a known positive electrode active material such as lithium-containing cobalt oxide (LiCoO₂), lithium manganate (LiMn₂O₄), lithium-containing nickel oxide (LiNiO₂), a lithium-containing complex oxide of Co-Ni-Mn, a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a lithiumrich spinel compound represented by Li₁₊ₓMn₂₋ₓO₄ (0 < x < 2), Li[Ni_{0.17}Li_{0.2}Co_{0.07}Mn_{0.56}]O₂, or LiNi_{0.5}Mn_{1.5}O₄ without any specific limitations. Note that the lithium-containing complex oxide of Co-Ni-Mn may be Li(Ni_{0.6}Co_{0.2}Mn_{0.2})O₂, Li(Ni_{0.5}Co_{0.2}Mn_{0.3})O₂, Li(Ni_{1/3}Co_{1/3}Mn_{1/3})O₂, or the like.

Of the positive electrode active materials described above, it is preferable to use lithium-containing cobalt oxide (LiCoO₂), lithium-containing nickel oxide (LiNiO₂), a lithium-containing complex oxide of Co-Ni-Mn, Li[Ni_{0.17}Li_{0.2}Co_{0.07}Mn_{0.56}]O₂, or LiNi_{0.5}Mn_{1.5}O₄ from a viewpoint of improving battery capacity of a secondary battery, for example, and more preferable to use a lithium-containing complex oxide of Co-Ni-Mn.

The amount and particle diameter of the positive electrode active material are not specifically limited and may be the same as those of a conventionally used positive electrode active material.

### <Content ratio>

The content ratio of the conductive material in the slurry composition is preferably not less than 0.01 parts by mass and not more than 20 parts by mass when the content of the positive electrode active material is taken to be 100 parts by mass. When the ratio of the conductive material is not less than the lower limit set forth above, electrical contact among the positive electrode active material can be promoted. Moreover, when the amount of the conductive material is not more than the upper limit set forth above, coatability of the slurry composition can be increased.

The preferred content ratio of the polymer in the slurry composition may be within a preferred range that is derived from the preferred range for the polymer relative to the conductive material that was previously described in the "Production method of conductive material dispersion liquid" section and the content ratio between the positive electrode active material and the conductive material that was described at the start of this paragraph.

### <Other components>

Examples of other components that may be contained in the slurry composition include, but are not specifically limited to, the same other components as may be contained in the presently disclosed binder composition. One other component may be used individually, or two or more other components may be used in combination in a freely selected ratio. In particular, in a case in which the slurry composition for a secondary battery positive electrode is a slurry composition for a lithium ion secondary battery positive electrode, it is preferable that a fluorine-containing polymer such as polyvinylidene fluoride (PVdF) is used as a binder in addition to the previously described polymer. In a case in which the slurry composition contains one or more binders other than the previously described polymer, the proportion constituted by the previously described polymer may be not less than 5 parts by mass and not more than 50 parts by mass when the total content of the one or more binders is taken to be 100 parts by mass. When the proportional content of the previously described polymer in the slurry composition is not less than the lower limit set forth above, high-temperature storage characteristics of an obtained secondary battery can be further enhanced. Moreover, when the proportional content of the previously described polymer is not more than the upper limit set forth above, adhesive strength can be displayed well in an electrode mixed material layer.

### <Production method of slurry composition>

The slurry composition set forth above can be produced by dissolving or dispersing the above-described components in a solvent such as an organic solvent. For example, it is preferable that the presently disclosed slurry composition is produced through a step of adding the positive electrode active material, solvent, optional components, and so forth to the conductive material dispersion liquid set forth above and performing mixing by a known method such as previously described.

### (Positive electrode for non-aqueous secondary battery)

The presently disclosed positive electrode for a non-aqueous secondary battery includes a positive electrode mixed material layer formed using the presently disclosed slurry composition for a non-aqueous secondary battery positive electrode. More specifically, the presently disclosed positive electrode for a secondary battery includes a positive electrode mixed material layer formed using the presently disclosed slurry composition for a positive electrode on a current collector. In other words, the electrode mixed material layer contains at least an electrode active material, a polymer, and carbon nanotubes serving as a conductive material. It should be noted that components contained in the electrode mixed material layer are components that are contained in the previously described slurry composition for a secondary battery electrode. Furthermore, the preferred ratio of these components in the electrode mixed material layer is the same as the preferred ratio of these components in the slurry composition.

By using the presently disclosed positive electrode for a non-aqueous secondary battery, it is possible to form a secondary battery having excellent high-temperature storage characteristics.

### <Production method of positive electrode for non-aqueous secondary battery>

The presently disclosed positive electrode for a non-aqueous secondary battery is produced, for example, through a step of applying the slurry composition for a non-aqueous secondary battery positive electrode set forth above onto a current collector (application step) and a step of drying the slurry composition that has been applied onto the current collector to form a positive electrode mixed material layer on the current collector (drying step).

The presently disclosed positive electrode for a non-aqueous secondary battery can also be produced by a method in which composite particles are prepared through dry granulation of the slurry composition for a non-aqueous secondary battery positive electrode set forth above and then these composite particles are used to form a positive electrode mixed material layer on a current collector.

### [Application step]

The slurry composition for a non-aqueous secondary battery positive electrode can be applied onto the current collector by any commonly known method without any specific limitations. Specific examples of application methods that can be used include doctor blading, dip coating, reverse roll coating, direct roll coating, gravure coating, extrusion coating, and brush coating. The slurry composition for a non-aqueous secondary battery positive electrode may be applied onto one side or both sides of the current collector. The thickness of the slurry coating on the current collector after application but before drying may be set as appropriate in accordance with the thickness of the positive electrode mixed material layer to be obtained after drying.

The current collector onto which the slurry composition for a non-aqueous secondary battery positive electrode is applied is a material having electrical conductivity and electrochemical durability. Specifically, the current collector may be made of, for example, iron, copper, aluminum, nickel, stainless steel, titanium, tantalum, gold, or platinum. Of these materials, aluminum foil is particularly preferable as a current collector used for a positive electrode. One of these materials may be used individually, or two or more of these materials may be used in combination in a freely selected ratio.

### [Drying step]

The slurry composition for a non-aqueous secondary battery positive electrode on the current collector may be dried by any commonly known method without any specific limitations. Examples of drying methods that can be used include drying by warm, hot, or low-humidity air; drying in a vacuum; and drying by irradiation with infrared light, an electron beam, or the like. Through drying of the slurry composition for a non-aqueous secondary battery positive electrode on the current collector as described above, a positive electrode mixed material layer is formed on the current collector, thereby providing a positive electrode for a non-aqueous secondary battery that includes the current collector and the positive electrode mixed material layer.

In the production method of the presently disclosed positive electrode for a non-aqueous secondary battery, the positive electrode mixed material layer may be subjected to a pressing process by mold pressing, roll pressing, or the like after the drying step. This pressing process can improve close adherence between the positive electrode mixed material layer and the current collector.

Furthermore, in a case in which the positive electrode mixed material layer contains a curable polymer, the polymer is preferably cured after the positive electrode mixed material layer has been formed.

### (Non-aqueous secondary battery)

The presently disclosed non-aqueous secondary battery includes a positive electrode, a negative electrode, an electrolyte solution, and a separator, wherein the presently disclosed positive electrode for a non-aqueous secondary battery is used as the positive electrode. The presently disclosed non-aqueous secondary battery has excellent high-temperature storage characteristics as a result of including the presently disclosed positive electrode for a non-aqueous secondary battery.

Although the following describes, as one example, a case in which the non-aqueous secondary battery is a lithium ion secondary battery, the present disclosure is not limited to the following example.

### <Negative electrode>

Any known negative electrode can be used as the negative electrode. Specifically, the negative electrode may, for example, be a negative electrode formed of a thin sheet of lithium metal or a negative electrode obtained by forming a negative electrode mixed material layer on a current collector.

The current collector may be made of a metal material such as iron, copper, aluminum, nickel, stainless steel, titanium, tantalum, gold, or platinum. The negative electrode mixed material layer may be a layer that contains a negative electrode active material and a binder. The binder is not specifically limited and may be freely selected from known materials.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that can be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. The concentration of the electrolyte in the electrolyte solution may be adjusted as appropriate.

### <Separator>

Examples of separators that can be used include, but are not specifically limited to, those described in JP2012-204303A. Of these separators, a microporous membrane formed of polyolefinic (polyethylene, polypropylene, polybutene, or polyvinyl chloride) resin is preferred since such a membrane can reduce the total thickness of the separator, which increases the ratio of electrode active material in the secondary battery, and consequently increases the volumetric capacity.

### <Production method of secondary battery>

The presently disclosed secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

In the examples and comparative examples, various attributes and evaluations were measured or performed as follows.

### <Weight-average molecular weight of polymer>

The weight-average molecular weight (Mw) of a polymer was measured by gel permeation chromatography (GPC) under the following measurement conditions using a LiBr-DMF solution of 10 mM in concentration.
- Separation column: Shodex KD-806M (produced by Showa Denko K.K.) • Detector: Differential refractive index detector RID-10A (produced by Shimadzu Corporation)
- Eluent flow rate: 0.3 mL/min
- Column temperature: 40°C
- Standard polymer: TSK standard polystyrene (produced by Tosoh Corporation)

### <Sulfur content of polymer>

An NMP solution of a polymer obtained in each example or comparative example was subjected to distillation under reduced pressure to remove solvent and obtain a sample. Approximately 0.02 g of the sample was weighed onto a magnetic board, was combusted in an automatic combustion device (produced by Yanaco), and the sulfur content was quantified by ion chromatography (930 Compact IC Flex produced by Metrohm). Note that the sulfur content was quantified as the amount of sulfur (µg) contained per 1 g of mass of the polymer (i.e., as an amount (ppm) based on the mass of the polymer).

### <Iodine value of polymer>

After coagulating 100 g of a water dispersion of a polymer produced in each example or comparative example in 1 L of methanol, 12 hours of vacuum drying was performed at a temperature of 60°C. The iodine value of the resultant dry polymer was measured in accordance with JIS K6235(2006).

### <D50 of carbon nanotubes in conductive material dispersion liquid>

In each example or comparative example, D50 by volume of carbon nanotubes in a conductive material dispersion liquid was measured through a dry integrated particle diameter distribution according to a laser diffraction/scattering particle size distribution analyzer (Microtrac MT3200II produced by Nikki Trading Corp.) with the pressure of dispersing air during measurement set as 0.02 MPa.

### <Dispersibility of conductive material in conductive material dispersion liquid>

The viscosity of a conductive material dispersion liquid produced in each example or comparative example was measured under conditions of a temperature of 25°C and a shear rate of 0.1 s⁻¹ using a rheometer (MCR 302 produced by Anton Paar), and was evaluated by the following standard. A lower viscosity at the same solid content concentration indicates better dispersibility of a conductive material in the conductive material dispersion liquid.
A: Viscosity of less than 250 Pa·s
B: Viscosity of not less than 250 Pa·s and less than 500 Pa·s
C: Viscosity of not less than 500 Pa·s and less than 750 Pa·s
D: Viscosity of 750 Pa·s or more

### <Viscosity stability of conductive material dispersion liquid>

The viscosity η0 of a conductive material dispersion liquid obtained in each example or comparative example was measured using a B-type viscometer (produced by Toki Sangyo Co., Ltd.; product name: TVB-10; rotation speed: 60 rpm). Next, the conductive material dispersion liquid that had undergone viscosity measurement was stirred using a planetary mixer (rotation speed: 60 rpm) for 24 hours, and the viscosity η1 of the conductive material dispersion liquid after stirring was measured using the same type of B-type viscometer (rotation speed: 60 rpm). The viscosity maintenance rate Δη of the conductive material dispersion liquid between before and after stirring was calculated (Δη = η1/η0 × 100(%)), and viscosity stability of the conductive material dispersion liquid was evaluated by the following standard. Note that the temperature during viscosity measurement was 25°C. A value of closer to 100% for the viscosity maintenance rate Δη indicates that the conductive material dispersion liquid has better viscosity stability.
A: Viscosity maintenance rate Δη of not less than 90% and not more than 110%
B: Viscosity maintenance rate Δη of not less than 80% and less than 90%
C: Viscosity maintenance rate Δη of not less than 70% and less than 80%

### <High-temperature storage characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C, and was subsequently subjected to 12 hours of aging at a temperature of 60°C. The lithium ion secondary battery was subsequently discharged to a cell voltage of 3.00 V by a 0.2C constant-current method at a temperature of 25°C. Thereafter, CC-CV charging of the lithium ion secondary battery was performed with a 0.2C constant current (upper limit cell voltage: 4.20 V) and CC discharging of the lithium ion secondary battery was performed to a cell voltage of 3.00 V with a 0.2C constant current. This charging and discharging at 0.2C was repeated three times. The discharge capacity of the 3^{rd} cycle at 0.2C was taken to be the initial capacity CX. The lithium ion secondary battery was subsequently CC-CV charged with a 0.2C constant current (upper limit cell voltage: 4.20 V). Next, the lithium ion secondary battery was stored in an inert oven set to a nitrogen atmosphere of 60°C inside of a treatment chamber for 4 weeks. The lithium ion secondary battery was subsequently discharged to a cell voltage of 3.00 V by a 0.2C constant-current method, and the discharge capacity at that time was taken to be CY. A high-temperature capacity maintenance rate expressed by (CY/CX) × 100(%) was determined and was evaluated by the following standard. A larger high-temperature capacity maintenance rate indicates that less degradation of the lithium ion secondary battery occurs during high-temperature storage (i.e., indicates better high-temperature storage characteristics).
A: High-temperature capacity maintenance rate of 90% or more
B: High-temperature capacity maintenance rate of not less than 85% and less than 90%
C: High-temperature capacity maintenance rate of not less than 80% and less than 85%
D: High-temperature capacity maintenance rate of less than 80%

### (Example 1)

### <Production of polymer>

A reactor was charged with 200 parts of deionized water, 25 parts of sodium dodecylbenzenesulfonate aqueous solution of 10% in concentration, 36 parts of acrylonitrile as a nitrile group-containing monomer, and 7.90 parts of t-dodecyl mercaptan as a molecular weight modifier in order. Next, gas inside of the reactor was purged three times with nitrogen, and then 64 parts of 1,3-butadiene was charged to the reactor as a conjugated diene monomer. The reactor was held at 5°C while adding 0.03 parts of cumene hydroperoxide as a polymerization initiator and appropriate amounts of a reductant and a chelating agent and while a polymerization reaction was continued under stirring. At the point at which the polymerization conversion rate reached 80%, 0.1 parts of hydroquinone aqueous solution having a concentration of 10% was added as a polymerization inhibitor to stop the polymerization reaction. Next, residual monomer was removed at a water temperature of 80°C to yield a water dispersion of a precursor of a polymer.

The obtained water dispersion of the precursor and palladium catalyst (solution obtained by mixing 1% palladium acetate acetone solution with an equivalent weight of deionized water) were added into an autoclave such that the palladium content was 3,000 ppm relative to the weight of solid content contained in the water dispersion. A hydrogenation reaction was performed at a hydrogen pressure of 3 MPa and a temperature of 50°C for 6 hours to yield a water dispersion of a target polymer.

Thereafter, contents of the autoclave were restored to normal temperature, the system was converted to a nitrogen atmosphere, and then an evaporator was used to perform concentrating to a solid content concentration of 40% to yield a concentrate of the water dispersion.

Next, 200 parts of N-methylpyrrolidone was added to 100 parts of the concentrate of the water dispersion, water and residual monomer were completely evaporated under reduced pressure, and then N-methylpyrrolidone was evaporated to yield an 8 mass% NMP solution (binder composition) of the polymer. The weight-average molecular weight of the obtained polymer was measured. The result is shown in Table 1.

### <Production of conductive material dispersion liquid>

A conductive material dispersion liquid having a solid content concentration of 7.2 mass% was produced by stirring 6.0 parts of carbon nanotubes (specific surface area: 250 m²/g) as a conductive material, 1.2 parts (in terms of solid content) of the above-described binder composition, and 92.8 parts of NMP using a disper blade (3,000 rpm, 10 minutes) and then mixing these materials at a circumferential speed of 8 m/s for 1 hour using a bead mill in which zirconia beads of 1 mm in diameter were used. The obtained conductive material dispersion liquid was used to evaluate dispersibility of the conductive material and viscosity stability as previously described. The results are shown in Table 1.

### <Production of slurry composition for secondary battery positive electrode and production of positive electrode>

In the conductive material dispersion liquid described above, 98.0 parts of a ternary active material having a layered structure (LiNi_{0.6}Co_{0.2}Mn_{0.2}O₂; average particle diameter: 10 µm) as a positive electrode active material, 1.0 parts of polyvinylidene fluoride as a binder, 1.0 parts (in terms of solid content) of the conductive material dispersion liquid, and NMP were added together and were mixed in a planetary mixer (60 rpm, 30 minutes) to produce a slurry for a positive electrode. Note that the additive amount of NMP was adjusted such that the viscosity of the obtained slurry composition for a positive electrode (measured by single-cylinder rotational viscometer in accordance with JIS Z8803:1991; temperature: 25°C; rotation speed: 60 rpm) was within a range of 4,000 mPa·s to 5,000 mPa·s.

### <Formation of positive electrode>

Aluminum foil of 20 µm in thickness was prepared as a current collector. The slurry for a positive electrode obtained as described above was applied onto one side of the aluminum foil by a comma coater such as to have a coating weight after drying of 20 mg/cm², was dried at 90°C for 20 minutes and at 120°C for 20 minutes, and was subsequently subjected to 10 hours of heat treatment at 60°C to obtain a positive electrode web. The positive electrode web was rolled by roll pressing to produce a sheet-shaped positive electrode including the aluminum foil and a positive electrode mixed material layer of 3.2 g/cm³ in density. The sheet-shaped positive electrode was cut to 48.0 mm in width and 47 cm in length to obtain a positive electrode for a lithium ion secondary battery.

### <Production of negative electrode for lithium ion secondary battery>

A 5 MPa pressure-resistant vessel equipped with a stirrer was charged with 33 parts of 1,3-butadiene as an aliphatic conjugated diene monomer, 3.5 parts of itaconic acid as a carboxy group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C so as to initiate polymerization. The polymerization reaction was quenched by cooling at the point at which the polymerization conversion rate reached 96% to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing a binder for a negative electrode.

Next, 48.75 parts of artificial graphite and 48.75 parts of natural graphite as negative electrode active materials and 1 part (in terms of solid content) of carboxymethyl cellulose as a thickener were loaded into a planetary mixer. These materials were diluted to a solid content concentration of 60% with deionized water and were then kneaded at a rotation speed of 45 rpm for 60 minutes. Thereafter, 1.5 parts in terms of solid content of the water dispersion containing the binder for a negative electrode that was obtained as described above was added and kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode.

The slurry composition for a negative electrode was applied onto the surface of copper foil of 15 µm in thickness serving as a current collector by a comma coater such as to have a coating weight of 10 ± 0.5 mg/cm². The copper foil with the slurry composition for a negative electrode applied thereon was subsequently conveyed inside an oven having a temperature of 80°C for 2 minutes and an oven having a temperature of 110°C for 2 minutes at a speed of 400 mm/min so as to dry the slurry composition on the copper foil and obtain a negative electrode web having a negative electrode mixed material layer formed on the current collector.

This negative electrode web was rolled by roll pressing to produce a sheet-shaped negative electrode including the copper foil and a negative electrode mixed material layer of 1.6 g/cm³ in density. The sheet-shaped negative electrode was cut to 50.0 mm in width and 52 cm in length to obtain a negative electrode for a lithium ion secondary battery.

### <Production of lithium ion secondary battery>

The produced positive electrode for a lithium ion secondary battery and negative electrode for a lithium ion secondary battery were wound up with the respective electrode mixed material layers thereof facing each other and with a separator (microporous membrane made of polyethylene) of 15 µm in thickness interposed therebetween using a core of 20 mm in diameter so as to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF₆ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) was prepared as an electrolyte solution.

Thereafter, the compressed roll was housed inside a laminate case made of aluminum together with 3.2 g of the electrolyte solution. After connecting a nickel lead at a specific location on the negative electrode for a secondary battery and connecting an aluminum lead at a specific location on the positive electrode for a secondary battery, an opening of the case was heat sealed to obtain a lithium ion secondary battery as the presently disclosed electrochemical device. This lithium ion secondary battery had a pouch shape of 35 mm in width, 60 mm in height, and 5 mm in thickness. The nominal capacity of the battery was 700 mAh.

High-temperature storage characteristics were evaluated for the obtained lithium ion secondary battery. The result is shown in Table 1.

### (Examples 2 to 4)

The amount of t-dodecyl mercaptan as a molecular weight modifier compounded in polymer production was adjusted such that the sulfur content and weight-average molecular weight of the obtained polymer were values indicated in Table 1. Specifically, the sulfur content of the obtained polymer was reduced and the weight-average molecular weight of the obtained polymer was increased by reducing the amount of t-dodecyl mercaptan, whereas the sulfur content of the obtained polymer was increased and the weight-average molecular weight of the obtained polymer was reduced by increasing the amount of t-dodecyl mercaptan. With the exception of these points, various operations and evaluations were performed in the same way as in Example 1. The results are shown in Table 1.

### (Example 5)

Various operations and evaluations were performed in the same way as in Example 1 with the exception that a polymer produced as described below was used. The results are shown in Table 1.

### <Production of polymer>

### [Production of polymer precursor]

In a metal bottle, 0.2 parts of sodium carbonate was dissolved in 200 parts of deionized water. Next, 2.5 parts of potassium caprate (soap of a fatty acid having a carbon number of 10) was added to the metal bottle as an emulsifier. An aqueous solution containing 1.0 parts of a naphthalenesulfonic acid-formaldehyde polycondensate was further added as a dispersant. Thereafter, 35 parts of acrylonitrile as a nitrile group-containing monomer and 0.5 parts of t-dodecyl mercaptan as a molecular weight modifier were added to the metal bottle in this order. Gas inside the metal bottle was purged three times with nitrogen, and then 64 parts of 1,3-butadiene was added as a conjugated diene monomer. The metal bottle was maintained at 5°C while adding a redox polymerization initiator that was a combination of 0.1 parts of cumene hydroperoxide, 0.01 parts of ethylenediaminetetraacetic acid iron monosodium salt hydrate, 0.03 parts of sodium hydroxymethanesulfinate dihydrate, and 0.02 parts of EDTA·4Na·4H₂O. The temperature was then maintained at 5°C for 16 hours while carrying out a polymerization reaction. Once the degree of polymerization reached 90%, the polymerization reaction was stopped through addition of 0.1 parts of hydroxylamine sulfate and 0.03 parts of diethylhydroxylamine as polymerization inhibitors. Residual monomer was removed using a rotary evaporator with a water temperature of 60°C to yield a latex of a polymer (nitrile rubber) including a conjugated diene monomer unit and a nitrile group-containing monomer unit. The chemical composition of the nitrile rubber was 36 mass% of acrylonitrile monomer units and 64 mass% of 1,3-butadiene monomer units, and the latex concentration was 25 mass%. A portion of the obtained latex was added to an aqueous solution of magnesium sulfate as a coagulant that was of an amount such as to be 1.0 mass% relative to nitrile rubber content, and was stirred therewith to coagulate the latex. Thereafter, filtration was performed with washing using water to obtain coagulated material that was then vacuum dried at a temperature of 60°C for 12 hours to yield a nitrile rubber as a polymer precursor.

### [Metathesis of polymer precursor]

Next, 9 parts of the obtained polymer precursor was dissolved in 141 parts of monochlorobenzene and was loaded into a reactor. The reactor was heated to 80°C, and then 2 L of a monochlorobenzene solution containing bis(tricyclohexylphosphine)benzylidene ruthenium dichloride as a Grubbs' catalyst was added thereto such that the amount of the Grubbs' catalyst was 0.25 parts relative to 100 parts of the polymer precursor. The internal pressure of the reactor was raised to 3.5 MPa with ethylene as a co-olefin, and a metathesis reaction of the polymer was carried out at a stirring rate of 600 rpm. During the reaction, a constant temperature was maintained using a cooling coil connected to a temperature controller and a heat sensor.

### [Hydrogenation reaction]

Next, the inside of the reactor was degassed three times with 0.7 MPa Hz while continuing stirring. The temperature of the reactor was then raised to 130°C, and 1 L of a monochlorobenzene solution containing Wilkinson's catalyst and triphenylphosphine was added to the reactor. The amount of Wilkinson's catalyst was 0.075 parts per 100 parts of the polymer, and the amount of triphenylphosphine was 1 part per 100 parts of the polymer. The temperature was then raised to 138°C, a hydrogenation reaction of the polymer was performed under a hydrogen pressure (gauge pressure) of 8.4 MPa, and the reaction was ended with an iodine value of 5.0 mg/100 mg as the end point. After the reaction had ended, 0.2 parts of activated carbon having an average diameter of 15 µm was added into the reactor and was stirred for 30 minutes. Thereafter, filtration was carried out using a filter having a pore diameter of 5 µm. Steam was introduced into the filtrate, and monochlorobenzene was removed and recovered through steam distillation. Precipitated polymer (hydrogenated polymer) was recovered by separation and drying. Next, N-methylpyrrolidone was added to the dried polymer to obtain an 8 mass% NMP solution (binder composition) of the polymer. The weight-average molecular weight of the obtained polymer was measured. The result is shown in Table 1.

### (Comparative Examples 1 and 2)

The amount of t-dodecyl mercaptan as a molecular weight modifier compounded in polymer production was reduced so as to reduce the sulfur content and increase the weight-average molecular weight of the obtained polymer. With the exception of these points, various operations and evaluations were performed in the same way as in Example 1. The results are shown in Table 1.

### [Table 1]

**Table 1**

| | | | Example 1 | Example 2 | Example 3 | Example 4 | Example 5 | Comparative Example 1 | Comparative Example 2 |
|---|---|---|---|---|---|---|---|---|---|
| Polymer | Chemical composition | Nitrile group-containing monomer units [mass%] | 36 | 36 | 36 | 36 | 36 | 36 | 36 |
| | | Linear alkylene structural units + 1,3-Butadiene units [mass%] | 64 | 64 | 64 | 64 | 64 | 64 | 64 |
| | Weight-average molecular weight [-] | | 9000 | 100000 | 250000 | 9000 | 10000 | 500000 | 350000 |
| | Sulfur content [ppm] | | 9000 | 4000 | 500 | 9000 | 3000 | 100 | 300 |
| | Iodine value [mg/100 mg] | | 50 | 50 | 50 | 100 | 100 | 50 | 60 |
| Solvent | Type | | NMP | NMP | NMP | NMP | NMP | NMP | NMP |
| Conductive material | Type | | CNT | CNT | CNT | CNT | CNT | CNT | CNT |
| Conductive material dispersion liquid | D50 of CNTs [µm] | | 0.6 | 4.0 | 5.0 | 4.0 | 3.0 | 6.0 | 8.0 |
| Evaluation | Dispersibility of conductive material dispersion liquid | | A | B | C | B | B | D | C |
| | Viscosity stability of conductive material dispersion liquid | | A | A | A | C | C | A | B |
| | High-temperature storage characteristics of secondary battery | | A | B | B | B | B | D | D |

It can be seen from Table 1 that it was possible to form a conductive material dispersion liquid having excellent dispersibility and a secondary battery having excellent high-temperature storage characteristics through the binder composition for a non-aqueous secondary battery positive electrode produced in each of Examples 1 to 5, which contained a polymer including a nitrile group-containing monomer unit and having a weight-average molecular weight of 300,000 or less and a sulfur content of 500 ppm or more. It can also be seen that it was not possible to form a conductive material dispersion liquid having excellent dispersibility and a secondary battery having excellent high-temperature storage characteristics through the binder composition for a non-aqueous secondary battery positive electrode produced in each of Comparative Examples 1 and 2, which contained a polymer having a weight-average molecular weight and a sulfur content that were both outside of the ranges mentioned above.

### INDUSTRIAL APPLICABILITY

According to the present disclosure, it is possible to provide a binder composition for a non-aqueous secondary battery positive electrode that can form a conductive material dispersion liquid having excellent dispersibility and a secondary battery having excellent high-temperature storage characteristics.

Moreover, according to the present disclosure, it is possible to provide a conductive material dispersion liquid for a non-aqueous secondary battery positive electrode that has excellent dispersibility and can form a secondary battery having excellent high-temperature storage characteristics.

Furthermore, according to the present disclosure, it is possible to provide a slurry composition for a non-aqueous secondary battery positive electrode that can form a secondary battery having excellent high-temperature storage characteristics.

Also, according to the present disclosure, it is possible to provide a positive electrode for a non-aqueous secondary battery that can form a secondary battery having excellent high-temperature storage characteristics and also to provide a secondary battery that has excellent high-temperature storage characteristics.

## Claims

1. A binder composition for a non-aqueous secondary battery positive electrode comprising a polymer, wherein
the polymer includes a nitrile group-containing monomer unit, and
the polymer has a weight-average molecular weight of 300,000 or less and a sulfur content of 500 ppm or more.

2. The binder composition for a non-aqueous secondary battery positive electrode according to claim 1, wherein the polymer includes a linear alkylene structural unit having a carbon number of 4 or more in a proportion of not less than 30 mass% and not more than 80 mass%.

3. The binder composition for a non-aqueous secondary battery positive electrode according to claim 1 or 2, wherein the polymer includes the nitrile group-containing monomer unit in a proportion of not less than 10 mass% and not more than 55 mass%.

4. The binder composition for a non-aqueous secondary battery positive electrode according to any one of claims 1 to 3, wherein the polymer has an iodine value of not less than 5 mg/100 mg and not more than 100 mg/100 mg.

5. A conductive material dispersion liquid for a non-aqueous secondary battery positive electrode comprising: a conductive material including carbon nanotubes; a dispersion medium; and the binder composition for a non-aqueous secondary battery positive electrode according to any one of claims 1 to 4.

6. The conductive material dispersion liquid for a non-aqueous secondary battery positive electrode according to claim 5, wherein a value of volume-average particle diameter D50 in a particle size distribution for dispersed particle diameter of the carbon nanotubes is not less than 0.1 µm and not more than 5.0 µm.

7. A slurry composition for a non-aqueous secondary battery positive electrode comprising: an electrode active material; and the conductive material dispersion liquid for a non-aqueous secondary battery positive electrode according to claim 5 or 6.

8. A positive electrode for a non-aqueous secondary battery comprising a positive electrode mixed material layer formed using the slurry composition for a non-aqueous secondary battery positive electrode according to claim 7.

9. A non-aqueous secondary battery comprising: the positive electrode for a non-aqueous secondary battery according to claim 8; a negative electrode; a separator; and an electrolyte solution.
